# EUROPEAN PATENT SPECIFICATION

(11) **EP 2 687 735 B1**
(45) Date of publication and mention of the grant of the patent: **16.09.2020**
(21) Application number: 12177374.1
(22) Date of filing: 20.07.2012
(51) Int. Cl.: F16B 25/00

(54) **Masonry screws**
Mauerwerkschrauben
Vis de maçonnerie

(43) Date of publication of application: 22.01.2014
(73) Proprietor: Black & Decker Inc., New Britain, CT 06053 (US)
(72) Inventor: Gaudron, Paul, Harrington, Delaware 19952 (US); Olsen, Jacob, Roselle, Illinois 60172 (US)
(74) Representative: SBD IPAdmin

(56) References cited:
- EP-A1- 0 104 552
- EP-A1- 0 930 437
- EP-A1- 2 354 573
- WO-A1-89/07207
- US-A- 4 652 194

## Description

The invention relates to masonry screws.

Masonry screws are designed to be screwed into a hole provided in a masonry substrate. Masonry substrates may be formed of brick, block, concrete or the like. Masonry screws comprise an elongate cylindrical shank and a head. The head is provided at the trailing end of the shank and configured to be engageable by a tool to allow a torque to be applied to the screw. A thread winds around the shank. The thread is configured to self-tap a thread into the wall of a hole in which the screw is installed.

The shank has a diameter, often referred to as a minor, or core, diameter.

This diameter should be less than the diameter of the hole in which the screw is installed. The difference between the core diameter and hole diameter affects the pullout strength of the screw. The pullout strength is a measure of the tensile force required to pull a screw from a hole in which it has been installed. Generally, a larger core diameter results in a higher pullout strength. However, if the core diameter is too large, the torque required to turn the screw in the hole can become excessive making the screw difficult to install.

EP2354573A1 relates to a screw anchor.

International Patent Application 89/07207 discloses a screw for porous concrete. The screw includes a shank furnished with a thread defined by trailing and leading flanks. Various embodiments are disclosed in which the flanks may be linear or arcuate. The portion of the shank between flanks of adjacent thread turns is generally uniform in diameter.

European Patent Publication No. 0930437 discloses a screw having a threaded shank, the thread having a generally rectangular cross-section. The portions of the shank between any adjacent pair of thread turns define rather complex depressions defined by multiple facets.

US Patent Publication No. 4652194 discloses a screw having a shank furnished with a thread, which is provided with notches spaced therealong for scraping material from the bore into which the screw is threaded.

The invention provides a masonry screw comprising the features of claim 1.

In order that the invention may be well understood, some examples, which are given by way of example only, will now be described with reference to the drawings in which:
Figure 1 is a side elevation of a masonry screw;
Figure 2 is an enlarged section view on line A-A in Figure 1;
Figure 3 is a view corresponding to Figure 2 showing the masonry screw installed in a hole in a masonry substrate; and
Figure 4 is a schematic view corresponding to Figure 2 illustrating features of the masonry screw.

It should be noted that said examples do not represent embodiments of the invention but are examples useful for understanding the invention.

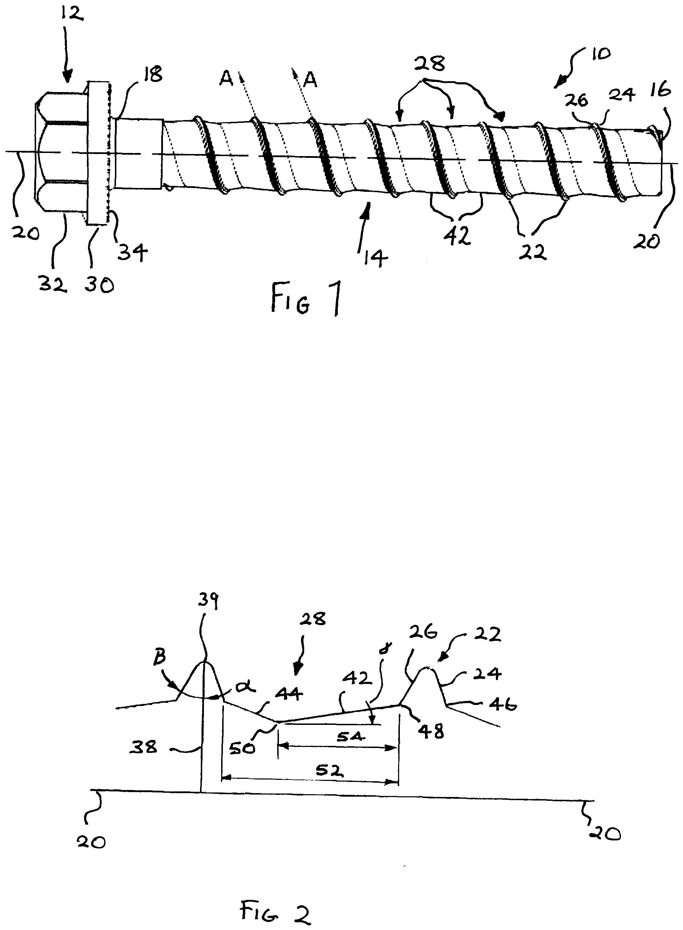

Referring to Figure 1, a masonry screw 10 comprises a head 12 and an elongate shank 14. The shank has a leading end 16 and a trailing end 18. The head 12 is attached to the trailing end 18 of the shank. The shank 14 has a longitudinal axis 20 that extends between the leading and trailing ends 16, 18. The longitudinal axis 20 defines an axial direction of the shank. The masonry screw 10 further comprises a thread 22 that winds around the shank 14. The thread 14 has a leading flank 24 and a trailing flank 26. Between an adjacent leading flank 24 and trailing flank 26 the shank has a non-uniform diameter that defines a depression 28 between the adjacent flanks.

The head 12 may be of any suitable configuration that will allow it to be engaged by a tool to apply a torque to the masonry screw 10 during the installation and removal of the screw from a hole in a masonry substrate. In the illustrated example the head comprises a generally circular flange 30 from which the shank extends and a hexagonal portion 32 that forms the free end of the head. The side of the flange 30 disposed remote from the hexagonal portion 32 and facing the leading end 16 may be provided with a series of projections 34. The projections 34 are configured to provide improved grip when the head 12 engages a part the screw 10 is used to secure to a masonry substrate. The projections 34 may be radially extending ribs disposed at equi-spaced intervals around the flange 30.

Although not essential, the thread 22 extends from the leading end 16 of the shank 14 to a position adjacent, but short of the trailing end 18. This leaves a relatively short unthreaded shank portion immediately adjacent the head 12. The leading end 16 may be provided with a chamfer to facilitate insertion into a hole. Alternatively, the leading end 16 may form a point and be threaded to the end of the point. This configuration provides the possibility of screwing the masonry screw through a hole in a masonry substrate and into a further substrate that lies beyond. The further substrate may, for example, be an aluminium or wooden substrate.

Referring to Figure 2, the leading flank 24 of the thread is disposed at an angle α to a line 38 that is perpendicular to the longitudinal axis 20 and passes through a crest 39 of the thread. The trailing flank 26 is disposed at an angle β to the line 38. The angle α is different to the angle β. In the illustrated example the angle α is less than the angle β so that the leading flank is more steeply inclined with respect to the longitudinal axis 20 and line 38 than is the trailing flank. The angle α may be substantially in the range 0° to 25°. In some examples the angle α may be substantially in the range 15° to 25°. The angle β may be substantially in the range 30° to 40. In the illustrated example, the angle α is substantially 20° and the angle β is substantially 30°.

The depression 28 has an angular profile defined by a first inclined face 42 that faces the trailing end 18 of the shank 14 and a second inclined face 44 that faces the leading end 16. Although not essential, the radially innermost ends of the inclined faces 42, 44 may be disposed in proximity such that the depression 40 has a substantially V-shaped profile. This is the form shown in the illustrated example.

The leading flank 24 has a radially innermost end 46 and the trailing flank has a radially innermost end 48. The ends 46, 48 adjoin the shank 14 to define a base of the thread 22. A length 52 is defined between the radially innermost ends 46, 48 of the adjacent leading and trailing flanks 24, 26. In the axial direction of the shank 14, the radially innermost end 50 of the inclined face 42 is spaced from the radially innermost end 48 a distance 54 that is at least one half of the distance 52. In the illustrated embodiment, the distance 54 is substantially two thirds of the length 52.

The inclined face 42 is configured such that in the axial direction of the shank 14 it extends continuously at an angle γ to the longitudinal axis 20. The inclined face 44 extends continuously at angle to the longitudinal axis that is different to the angle γ. Thus, in axial cross-section the inclined faces 42, 44 are substantially flat and have different angles of inclination.

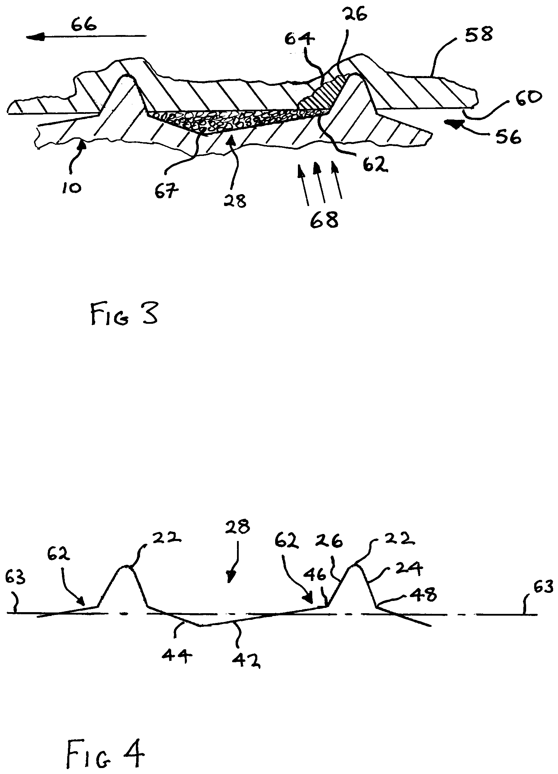

Referring to Figure 3, a portion of the masonry screw 10 is shown installed in a hole 56 defined in a concrete substrate 58. The thread 22 is shown embedded in a wall 60 of the hole 56. The thread 22 has tapped a receiving thread in the wall 60 during installation of the masonry screw. The depression 28 is configured to improve the pullout strength of the masonry screw 10 when installed in a such a hole as compared to a comparable size screw having a plain cylindrical shank. Referring additionally to Figure 4, the provision of the depression 28 allows the core diameter of the shank to be increased locally as compared with the core diameter 63 of a plain cylindrical shank. This is because the smaller diameter portions of the depression provide a compensating space to receive the debris created as the masonry screw is screwed into a hole. If the core diameter were increased along the whole length of the shank the torque required to turn the screw would become excessive making the screw difficult or impossible to install. The configuration of the depression makes it possible to provide a maximum core diameter of the shank at a region 62 adjacent the radially innermost end of the trailing flank 26 of the thread that is greater than the core diameter 63 of a comparably sized fixed diameter shank. The increased core diameter adjacent the trailing flank 26 is useful since ordinarily the portion 64 of the concrete substrate 58 adjacent the trailing flank is liable to shear if a tensile pullout force 66 is applied to the masonry screw (the portion 64 will break away from the wall 60 of the hole and move towards the screw shank). The increased core diameter in the region 62 assists in maintaining a firm interface between the wall 60 and the concrete debris 67 trapped between the wall and the shank 14. This helps to put the concrete in compression, a condition in which concrete is naturally strong. Furthermore, the configuration of the inclined face 42 is such as to create a wedging action between the concrete debris 67 accumulated in the depression 28 and the wall 60. When a pullout force acts on the masonry screw, the wedging action provides a force 68 that puts the wall 60 of the hole 56 in compression.

Masonry screws are usually used in holes drilled with a specified standard size carbide drill bits. Accordingly, in sizing a masonry screw account has to be taken of the size of hole that will be produced by a standard size carbide drill bit. Carbide drill bits are usually produced to conform to standards such as the American National Standards Institute's standard for 'Carbide-Tipped Masonry Drill Bits and Blanks for Carbide Tipped Masonry Drills' (ANSI® B212.15-1994). This ANSI standard sets out a tolerance range for different size carbide bits. For example, for a nominal drill diameter of 0.625 inches, the bit size is permitted to range between 0.650 and 0.660 inches (where 0.625 inches is approximately 15.87mm, 0.650 inches is approximately 16.51mm and 0.660 is approximately 16.76mm at 0.245mm to 0.001 inches). A conventional straight-sided cylindrical masonry screw shank will have a core diameter of around 88.6% of the maximum permitted bit size of the drill bit specified for the screw. So for a nominal 0.625 inches drill bit, a conventional shank will have a core diameter of 0.584 inches (where 0.584 inches is approximately 14.83mm). The masonry screw 10 may have a core diameter in the region 62 that is in the range of 93 to 95% of the maximum permitted bit size of the drill bit specified for the screw. So for a nominal 0.625 inch drill bit, a 0.625 inch masonry screw 10 may have a core diameter in the region 62 of 0.614 to 0.627 inches (where 0.614 inches is approximately 15.6mm and 0.627 inches is approximately 15.92mm). The minimum diameter of the depression may be in the range of 86 to 88% of the maximum permitted bit size. So for a nominal 0.625 inch drill bit, a 0.625 inch masonry screw 10 may have a minimum core diameter in the depression of between 0.568 to 0.581 inches (where 0.568 inches is approximately 14.43 mm and 0.581 inches is approximately 14.75mm). For a 0.625 inch masonry screw 10 for use with a standard nominal 0.625 inch drill bit these proportions can be summarised as follows:

| Masonry screw 10 | Core diameter (inch) | Core diameter (mm) |
|---|---|---|
| Max core diameter (at 62) | 0.614 to 0.627 | 15.6 to 15.92 |
| Min core diameter in depression | 0.568 to 0.581 | 14.43 to 14.75 |
| | | |
| Conventional masonry screw | | |
| Constant core diameter | 0.584 | 14.83 |

Put another way, the maximum core diameter defined by the depression at the region 62 is approximately 98.24 to 100.32% of the nominal diameter of the masonry screw and the minimum diameter is approximately 90.88 to 92.96% of the nominal diameter of the screw. A conventional straight-side constant diameter cylindrical shank typically has a core diameter that is approximately 93.6% of the nominal diameter of the masonry screw.

The example shown in Figure 1 has a maximum diameter at the region 62 of approximately 94% of the maximum sized bit of a standard carbide drill bit and a minimum diameter of approximately 87% of the maximum sized carbide drill bit.

Compared with a conventional masonry screw with a straight-sided constant diameter shank, providing a depression between adjacent facing flanks of the thread permits a masonry screw 10 to have a maximum diameter in selected areas that is significantly larger than the diameter of a conventional shank balanced by a minimum diameter that is less than the diameter of the conventional shank by a smaller amount. Thus by making the core diameter relatively smaller in areas of less importance, it is possible to make the core diameter relatively larger in areas in which increased core diameter can affect the pullout strength of the masonry screw.

In the illustrated example the leading and trailing flanks 24, 26 have respective angles α, β that are different. This is not essential. Instead, the flanks may have the same angle so that the thread is symmetric in cross-section. However, it can be advantageous to use different angles α, β. The thread needs a certain lateral thickness in order to resist the shear forces it will encounter in use. This thickness can be represented as the sum of the angles α, β. By increasing the angle β of the trailing flank it is possible to improve the pullout strength of the masonry screw. However, if the thickness of the thread as represented by the sum of the angles α, β is increased, the screw becomes harder to install. Accordingly, while increasing the angle β of the trailing flank it is desirable to reduce the angle α of the leading flank so that the sum of the two angles is not increased, or at least not increased unduly, as compared with a comparable size screw with a symmetric thread. In this way, it is possible to configure the thread to provide the required shear strength and improve the pullout strength of the screw without making installation more difficult.

In the illustrated example the depression 28 comprises two inclined faces 42, 44 configured to define a generally V-shaped profile. It is to be understood that this is not essential. For example, a face that is parallel to the longitudinal axis or one or more faces having different angles of inclination may be interposed between the inclined faces 42, 44. It is believed that a configuration the same as or similar to the configuration shown in Figures 2 to 4, provides a balance between putting a limit on the amount of shank 14 in the region 62 with a relatively larger diameter and not having the inclined face 44 sloping too steeply, which may create a stress riser that might make the screw susceptible to brittle failure or hydrogen embrittlement failure.

The masonry screw 10 may be made of any known suitable material. For example, the screw may be of a case hardened low carbon steel. Alternatively the screw may be of a case hardened medium carbon steel, an induction hardened low or medium carbon steel, stainless steel or a bi-metal stainless steel with a carbon steel tip.

In the illustrated example, the thread 22 winds around a part of the length of the shank 14 and the depression winds around the shank at least substantially coterminous with the thread. It is to be understood this is not essential. The thread may extend over the entire length of the shank. Additionally, or alternatively, the depression may winder around a greater or lesser part of the length than the thread.

## Claims

1. A masonry screw comprising:
a shank (14) having a leading end (16), a trailing end (18) and a longitudinal axis (20) that extends between said leading and trailing ends and defines an axial direction of said shank; and
a thread (22) winding around said shank and having a leading flank (24) and a trailing flank (26), said flanks having respective radially innermost ends (46, 48) adjoining said shank, the leading flank (24) being disposed at an angle α substantially in the range 15 to 25° to a line perpendicular to the longitudinal axis (20) and passes through a crest (39) of the thread, the trailing flank (26) being disposed at an angle β substantially in the range 30 to 40° to said line perpendicular to the longitudinal axis (20) and passes through the crest (39) of the thread;
wherein along a first part of the thread said shank defines a depression (28) between said adjacent leading and trailing flanks thereof, which depression has a first inclined face (42) that faces said trailing end, wherein in cross-section in said axial direction said depression (28) has a generally V-shaped profile; and
wherein along a second part of the thread said shank does not define a said depression (28) between said adjacent leading and trailing flanks thereof.

2. A masonry screw as claimed in claim 1, wherein in said axial direction said first inclined face (42) extends continuously at a first angle γ to said longitudinal axis.

3. A masonry screw as claimed in claim 1 or 2, wherein said depression has a second inclined face (44) that faces said leading end.

4. A masonry screw as claimed in claim 1, 2 or 3, wherein in said axial direction said shank (14) has a length (52) between said radially innermost ends (46, 48) of said adjacent leading and trailing flanks and said first inclined face (42) has a radially innermost end that in said axial direction is spaced from said radially innermost end of said trailing flank a distance (54) that is at least one half of said length (52).

5. A masonry screw as claimed in claim 4, wherein said distance (54) is substantially two thirds of said length (52).

6. A masonry screw as claimed in any preceding claim, wherein said second angle β is substantially 30° and said first angle α is substantially 20°.

7. A masonry screw as claimed in any one of the preceding claims, wherein said depression (28) is configured such that a maximum diameter (62) of said shank (14) between said adjacent trailing and leading flanks (24, 26) adjoins at least one of said respective radially innermost ends (46, 48) of said adjacent trailing and leading flanks.

8. A masonry screw as claimed in claim 7, wherein said maximum diameter (62) is substantially 93 to 95% of a maximum permitted diameter bit of a standard size carbide drill bit specified to produce a required hole size for the masonry screw.

9. A masonry screw as claimed in claim 8, wherein said depression is configured such that a minimum diameter (50) of said shank between said adjacent trailing and leading flanks is substantially 86 to 88% of said maximum permitted bit size.

## Patentansprüche

1. Mauerwerkschraube, umfassend:
einen Schaft (14), der ein vorderes Ende (16), ein hinteres Ende (18) und eine Längsachse (20) aufweist, die sich zwischen dem vorderen und hinteren Ende erstreckt und eine Axialrichtung des Schafts definiert; und
ein Gewinde (22), das um den Schaft gewunden ist und eine vordere Flanke (24) und eine hintere Flanke (26) aufweist, wobei die Flanken entsprechende radial innerste Enden (46, 48) aufweisen, die an den Schaft angrenzen, wobei die vordere Flanke (24) in einem Winkel α im Wesentlichen in dem Bereich von 15 bis 25° zu einer Linie senkrecht zur Längsachse (20) angeordnet ist und durch eine Spitze (39) des Gewindes läuft, die hintere Flanke (26) in einem Winkel β im Wesentlichen in dem Bereich von 30 bis 40° zu der Linie senkrecht zur Längsachse (20) angeordnet ist und durch die Spitze (39) des Gewindes läuft;
wobei entlang eines ersten Teils des Gewindes der Schaft eine Vertiefung (28) zwischen seinen benachbarten vorderen und hinteren Flanken definiert, welche Vertiefung eine erste geneigte Fläche (42), die dem hinteren Ende zugewandt ist, aufweist, wobei die Vertiefung (28) im Querschnitt in der Axialrichtung ein im Allgemeinen V-förmiges Profil aufweist; und
wobei entlang eines zweiten Teils des Gewindes der Schaft keine Vertiefung (28) zwischen seinen benachbarten vorderen und hinteren Flanken definiert.

2. Mauerwerkschraube nach Anspruch 1, wobei in der Axialrichtung die erste geneigte Fläche (42) sich kontinuierlich bei einem ersten Winkel γ zu der Längsachse erstreckt.

3. Mauerwerkschraube nach Anspruch 1 oder 2, wobei die Vertiefung eine zweite geneigte Fläche (44) aufweist, die dem vorderen Ende zugewandt ist.

4. Mauerwerkschraube nach Anspruch 1, 2 oder 3, wobei in der Axialrichtung der Schaft (14) eine Länge (52) zwischen den radial innersten Enden (46, 48) der benachbarten vorderen und hinteren Flanke aufweist und die erste geneigte Fläche (42) ein radial innerstes Ende aufweist, das in der Axialrichtung von dem radial innersten Ende der hinteren Flanke mit einer Distanz (54) beabstandet ist, die mindestens eine Hälfte der Länge (52) ist.

5. Mauerwerkschraube nach Anspruch 4, wobei die Distanz (54) im Wesentlichen zwei Drittel der Länge (52) ist.

6. Mauerwerkschraube nach einem der vorstehenden Ansprüche, wobei der zweite Winkel β im Wesentlichen 30° ist und der erste Winkel α im Wesentlichen 20° ist.

7. Mauerwerkschraube nach einem der vorstehenden Ansprüche, wobei die Vertiefung (28) so gestaltet ist, dass ein maximaler Durchmesser (62) des Schafts (14) zwischen den benachbarten vorderen und hinteren Flanken (24, 26) an mindestens eines der jeweiligen radial innersten Enden (46, 48) der benachbarten vorderen und hinteren Flanken angrenzt.

8. Mauerwerkschraube nach Anspruch 7, wobei der maximale Durchmesser (62) im Wesentlichen 93 bis 95% eines maximal zulässigen Spitzendurchmessers einer Karbidbohrspitze von Standardgröße ist, die spezifiziert ist, eine erforderliche Lochgröße für die Mauerwerkschraube zu produzieren.

9. Mauerwerkschraube nach Anspruch 8, wobei die Vertiefung so gestaltet ist, dass ein Minimaldurchmesser (50) des Schafts zwischen den benachbarten vorderen und hinteren Flanken im Wesentlichen 86 bis 88% der maximal zulässigen Spitzengröße ist.

## Revendications

1. Vis de maçonnerie, comprenant :
une tige (14) présentant une extrémité avant (16), une extrémité arrière (18) et un axe longitudinal (20) qui s'étend entre lesdites extrémités avant et arrière et définit une direction axiale de ladite tige ; et
un filet (22) s'enroulant autour de ladite tige et présentant un flanc avant (24) et un flanc arrière (26), lesdits flancs présentant des extrémités radialement les plus intérieures respectives (46, 48) contiguës à ladite tige, le flanc avant (24) étant disposé selon un angle α sensiblement dans la plage de 15 à 25° par rapport à une ligne perpendiculaire à l'axe longitudinal (20) et traverse une crête (39) du filet, le flanc arrière (26) étant disposé selon un angle β sensiblement dans la plage de 30 à 40° par rapport à ladite ligne perpendiculaire à l'axe longitudinal (20) et traverse la crête (39) du filet ;
dans laquelle, le long d'une première partie du filet, ladite tige définit une dépression (28) entre lesdits flancs avant et arrière adjacents de celui-ci, laquelle dépression présente une première face inclinée (42) qui fait face à ladite extrémité arrière, dans laquelle, en section transversale dans ladite direction axiale, ladite dépression (28) présente un profil généralement en forme de V ; et
dans laquelle, le long d'une seconde partie du filet, ladite tige ne définit pas une dite dépression (28) entre lesdits flancs avant et arrière adjacents de celui-ci.

2. Vis de maçonnerie selon la revendication 1, dans laquelle, dans ladite direction axiale, ladite première face inclinée (42) s'étend en continu selon un premier angle γ par rapport audit axe longitudinal.

3. Vis de maçonnerie selon la revendication 1 ou 2, dans laquelle ladite dépression présente une seconde face inclinée (44) qui fait face à ladite extrémité avant.

4. Vis de maçonnerie selon la revendication 1, 2 ou 3, dans laquelle, dans ladite direction axiale, ladite tige (14) présente une longueur (52) entre lesdites extrémités radialement les plus intérieures (46, 48) desdits flancs avant et arrière adjacents et ladite première face inclinée (42) présente une extrémité radialement la plus intérieure qui, dans ladite direction axiale, est espacée de ladite extrémité radialement la plus intérieure dudit flanc arrière d'une distance (54) qui est au moins une moitié de ladite longueur (52).

5. Vis de maçonnerie selon la revendication 4, dans laquelle ladite distance (54) est sensiblement deux tiers de ladite longueur (52).

6. Vis de maçonnerie selon l'une quelconque des revendications précédentes, dans laquelle ledit second angle β est sensiblement 30° et ledit premier angle α est sensiblement 20°.

7. Vis de maçonnerie selon l'une quelconque des revendications précédentes, dans laquelle ladite dépression (28) est configurée de sorte qu'un diamètre maximal (62) de ladite tige (14) entre lesdits flancs avant et arrière adjacents (24, 26) est contigu à au moins une desdites extrémités radialement les plus intérieures respectives (46, 48) desdits flancs avant et arrière adjacents.

8. Vis de maçonnerie selon la revendication 7, dans laquelle ledit diamètre maximal (62) est sensiblement de 93 à 95 % d'un embout de diamètre maximal autorisé d'une mèche de forage de carbure de taille standard spécifiée pour produire une taille de trou exigée pour la vis de maçonnerie.

9. Vis de maçonnerie selon la revendication 8, dans laquelle ladite dépression est configurée de sorte qu'un diamètre minimal (50) de ladite tige entre lesdits flancs avant et arrière adjacents est sensiblement de 86 à 88 % de ladite taille d'embout maximale autorisée.
